# EUROPÄISCHE PATENTANMELDUNG

(11) **EP 4 428 416 A1**
(43) Veröffentlichungstag der Anmeldung: **11.09.2024**
(21) Anmeldenummer: 24161320.7
(22) Anmeldetag: 05.03.2024
(51) Int. Cl.: F16K 31/06, F16K 31/08

(54) **MAGNETVENTIL**

(30) Priorität: 07.03.2023 DE 102023105529
(71) Anmelder: ZF CV Systems Europe BV, 1170 Brüssel (BE)
(72) Erfinder: KNOKE, Stefan, 30657 Hannover (DE)
(74) Vertreter: Copi, Joachim

(57) **Zusammenfassung**

Die Erfindung betrifft ein Magnetventil (1), mit einem Ventilgehäuse (2), mindestens einer elektromagnetischen Spule (3), welche einen mit dem Ventilgehäuse verbundenen Spulenträger (10) und eine an dem Spulenträger angeordnete elektrisch leitende Wicklung (6) aufweist, mindestens einem unbeweglich angeordneten ferromagnetischen Kern (4), einem innerhalb der Spule koaxial zur Spulenlängsachse (9) beweglich angeordneten Anker (5), einer am Ventilgehäuse ausgebildeten Ventileinlassöffnung (7) mit einem Ventilsitz (14), einer am Ventilgehäuse ausgebildeten Ventilauslassöffnung (8), und mit einem mit dem Anker (5) verbundenen Ventilschließelement (13), wobei zumindest die Ventileinlassöffnung (7) durch das Ventilschließelement (13) und den Ventilsitz (14) druckdicht verschließbar ist, sowie mit einer den Anker (5) und das Ventilschließelement in Schließrichtung oder in Öffnungsrichtung belastenden Rückstelleinrichtung.

## Beschreibung

Die Erfindung betrifft ein Magnetventil mit einem Ventilgehäuse, mit mindestens einer elektromagnetischen Spule, welche einen mit dem Ventilgehäuse verbundenen Spulenträger und eine an dem Spulenträger angeordnete elektrisch leitende Wicklung aufweist, mit mindestens einem unbeweglich angeordneten ferromagnetischen Kern, einem innerhalb der Spule koaxial zur Spulenlängsachse beweglich angeordneten Anker, eine am Ventilgehäuse ausgebildete Ventileinlassöffnung mit einem Ventilsitz, eine am Ventilgehäuse ausgebildete Ventilauslassöffnung, und mit einem mit dem Anker verbundenen Ventilschließelement, wobei zumindest die Ventileinlassöffnung durch das Ventilschließelement und den Ventilsitz druckdicht verschließbar ist, sowie mit einer den Anker und das Ventilschließelement in Schließrichtung oder in Öffnungsrichtung belastenden Rückstelleinrichtung.

Derartige Magnetventile sind in verschiedenen Ausführungsformen für eine Vielzahl von Anwendungen bekannt, beispielsweise zur Betätigung von Schaltvorrichtungen in automatisierten Schaltgetrieben von Kraftfahrzeugen. Die DE 10 2008 047 981 A1 und die DE 10 2019 133 007 A1 zeigen Ausführungsbeispiele von derartigen Magnetventilen, welche für Anwendungen in einem Kraftfahrzeug vorgesehen sind. Bei den bekannten Magnetventilen weist eine dort ausgebildete Rückstelleinrichtung meistens eine mechanische Rückstellfeder auf, welche den Anker in einer ersten Stellposition festhält. Die elektromagnetische Spule erzeugt bei deren Bestromung ein Magnetfeld, die auf den Anker eine Magnetkraft ausübt, welche der Federkraft der Rückstellfeder entgegenwirkt und diese überwiegt, wodurch der Anker aus der ersten Stellposition hin zu einer zweiten Stellposition bewegt und dort festgehalten wird. Nach dem Ausschalten der Bestromung der Spule kehrt der Anker durch die Federkraft der Rückstellfeder wieder in seine Ausgangslage zurück.

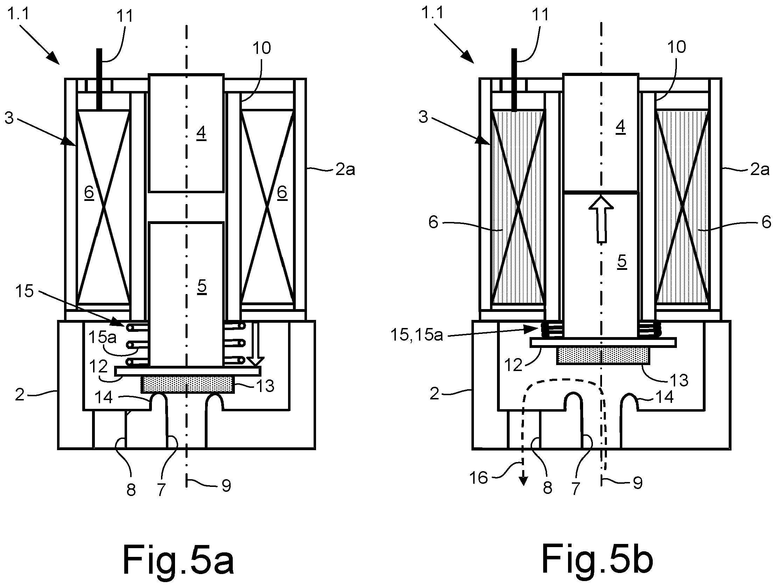

Die Fig. 5a zeigt in einem schematischen Längsschnitt ein bekanntes Magnetventil 1.1 in einem unbestromten Zustand der elektromagnetischen Spule 3, und die Fig. 5b zeigt dieses Magnetventil 1.1 im bestromten Zustand der Spule 3. Derartige Magnetventile können beispielswiese in einem hydraulischen oder pneumatischen Schaltkreis zur Schaltsteuerung eines automatisierten Schaltgetriebes angeordnet sein.

Wie die Figuren 5a und 5b veranschaulichen, weist dieses bekannte Magnetventil 1.1 eine in einem Ventilgehäuse 2 angeordnete elektromagnetische Spule 3 mit einem Kern 4 aus einem weichmagnetischen Werkstoff, einen Anker 5 aus einem magnetischen Werkstoff sowie eine Wicklung 6 auf, welche aus einem Kupferdraht besteht. In dem Ventilgehäuse 2 ist eine Ventileinlassöffnung 7 ausgebildet, welche beispielweise mit einer pneumatischen oder hydraulischen Versorgungsdruckleitung verbunden sein kann. Außerdem ist in dem Ventilgehäuse 2 eine Ventilauslassöffnung 8 ausgebildet, welche beispielsweise mit einer pneumatischen oder hydraulischen Steuerdruckleitung verbunden sein kann.

Das bekannte Magnetventil 1.1 ist als ein monostabiles Magnetventil ausgebildet. Der Kern 4 und der Anker 5 des Magnetventils 1.1 sind in dem Ventilgehäuse 2 radial innerhalb der Spule 6 sowie koaxial zu einer Spulenlängsachse 9 angeordnet. Der Anker 5 ist koaxial zur Spulenlängsachse 9 beweglich angeordnet, während der Kern 4 in Bezug zum Anker 5 an einem Gehäuseteil 2a befestigt ist. Ein weiterer Bestandteil des Magnetventils 1.1 ist ein hülsenförmiger Spulenträger 10, in dem der Kern 4 zumindest teilweise platziert und der Anker 5 koaxial beweglich geführt ist. Die Wicklung 6 der Spule 3 ist radial außen auf dem Spulenträger 10 aufgewickelt und weist einen elektrischen Anschluss 11 auf. Der Spulenträger 10 und die Wicklung 6 der Spule 3 sind radial außen von dem erwähnten Gehäuseteil 2a umgeben. Der Anker 5 ist endseitig und axial außerhalb des Spulenträgers 10 mit einer Stützplatte 12 verbunden. Auf der ankerfernen Seite dieser Stützplatte 12 ist ein elastisches Ventilschließelement 13 befestigt, mittels dem die ankerfern ausgebildete koaxiale Ventileinlassöffnung 7 in einer ersten Stellposition abdichten und in einer zweiten Stellposition freigeben werden kann. Hierzu ist das Ventilschließelement 13 an einen Ventilsitz 14 der Ventileinlassöffnung 8 angelegt oder es ist von diesem Ventilsitz 14 abgehoben angeordnet.

Die Fig. 5a zeigt die Schließstellung des Magnetventils 1.1, in welcher der bewegliche Anker 5 zu dem Kern 4 einen axial maximalen Abstand aufweist und das Ventilschließelement 13 an dem Ventilsitz 14 der Ventileinlassöffnung 7 diese abdichtend anliegt. Erreicht wird die in Fig. 5a dargestellte Schließstellung mittels der Federkraft einer Rückstelleinrichtung 15 für den beweglichen Anker 5 in Form einer als Schraubendruckfeder ausgebildeten Rückstellfeder 15a. Die Rückstellfeder 15a umgreift den Anker 5 koaxial und stützt sich einerseits über den Spulenträger 10 an dem Gehäuseteil 2a des Ventilgehäuses 2 und andererseits an der mit dem Anker 5 verbundenen Stützplatte 12 ab.

Das Magnetventil 1.1 ist dementsprechend vom NC-Typ (NC = normally closed), bei dem im stromlosen Zustand der Spule 3 ein Belüftungspfad 16 zwischen einem Anschluss für ein unter Druck stehendes Fluid, also der Ventileinlassöffnung 7, und einem Arbeitsanschluss, also der Ventilauslassöffnung 8, versperrt ist.

Die Fig. 5b zeigt die Offenstellung des bekannten Magnetventils 1.1. Um diese Offenstellung einzustellen wird die Spule 3 bestromt, in deren Folge der Anker 5 vom Ventilsitz 14 abhebt und hin zum Kern 4 bewegt wird. Sodann kann ein Medium, beispielsweise Druckluft, über den Belüftungspfad 16 durch das Magnetventil 1.1 hindurchströmen. Bei der Bestromung der Spule 3 bewirkt der Kern 4 aus einem weichmagnetischen Werkstoff eine Zentrierung und Verstärkung des durch die Spule 3 erzeugten Magnetfeldes, und zwar derart, dass die elektromagnetische Anziehungskraft stärker ist als die mechanische Rückstellkraft der Rückstellfeder 15a. Wird die Bestromung der Spule 3 abgeschaltet, so bewegt sich der Anker 5 durch die Kraftausübung der Rückstellfeder 15 wieder zurück zu seiner Schließstellung, nach deren Erreichen der Belüftungspfad 16 des Magnetventils 1.1 geschlossen ist.

Die bekannten Magnetventile mit einer Rückstelleinrichtung für einen beweglichen Anker in Form einer Rückstellfeder haben sich seit langem vielfach bewährt. Allerdings sind bei besonders beanspruchten Magnetventilen der eingangs genannten Bauart, insbesondere im Bereich von modernen automatisierten Schaltgetrieben von Kraftfahrzeugen, Ventilversagen festgestellt worden, welche auf einen Bruch der Rückstellfeder zurückzuführen sind. Um das Risiko eines Federbruchs zu verhindern, sind daher bei Magnetventilen, welche hohen Beschleunigungskräften und großen Betätigungszahlen ausgesetzt sind, zusätzliche Maßnahmen, wie eine Schmiermittelversorgung und/oder eine verstärkte Feder erforderlich. Dadurch entstehen höhere Herstellungskosten. Zudem ist der für die Anordnung einer Rückstellfeder verfügbare Bauraum begrenzt.

Vor diesem Hintergrund lag der Erfindung die Aufgabe zugrunde, ein Magnetventil vorzuschlagen, das betriebssicher, langlebig und zudem kostengünstig in der Herstellung ist. Insbesondere soll ein solches Magnetventil für den Einsatz in einem Schaltsystem eines Getriebes im Antriebsstrang eines Fahrzeugs geeignet sein.

Die Lösung dieser Aufgabe wird mit einem Magnetventil erreicht, welches die Merkmale des unabhängigen Anspruchs aufweist. Vorteilhafte Ausgestaltungen und Weiterbildungen der Erfindung in den abhängigen Ansprüchen definiert.

Demnach betrifft die Erfindung ein Magnetventil mit einem Ventilgehäuse, mindestens einer elektromagnetischen Spule, welche einen mit dem Ventilgehäuse verbundenen Spulenträger und eine an dem Spulenträger angeordnete elektrisch leitende Wicklung aufweist, mindestens einem unbeweglich angeordneten ferromagnetischen Kern, einem innerhalb der Spule koaxial zur Spulenlängsachse beweglich angeordneten Anker, einer am Ventilgehäuse ausgebildeten Ventileinlassöffnung mit einem Ventilsitz, einer am Ventilgehäuse ausgebildeten Ventilauslassöffnung, und mit einem mit dem Anker verbundenen Ventilschließelement, wobei zumindest die Ventileinlassöffnung durch das Ventilschließelement und den Ventilsitz druckdicht verschließbar ist, sowie mit einer den Anker und das Ventilschließelement in Schließrichtung oder in Öffnungsrichtung belastenden Rückstelleinrichtung.

Zur Lösung der gestellten Aufgabe ist bei diesem Magnetventil vorgesehen, dass die Rückstelleinrichtung mindestens zwei Permanentmagnete aufweist, dass ein erster Permanentmagnet mit dem Kern fest verbunden ist, dass ein zweiter Permanentmagnet mit dem Anker fest verbunden ist, dass die beiden Permanentmagnete derart angeordnet sind, dass eine Permanentmagnetkraft zwischen dem Kern und dem Anker wirksam ist, mittels welcher der Anker im unbestromten Zustand der Spule in eine Schließstellung oder in eine Offenstellung bewegbar und dort festhaltbar ist, und dass der Anker im bestromten Zustand der Spule durch eine Elektromagnetkraft der Spule, welche größer ist als die zwischen dem Kern und dem Anker wirksame Permanentmagnetkraft, aus der Schließstellung oder der Offenstellung herausbewegbar ist.

Die Erfindung löst das eingangs erwähnte technische Problem auf überraschend einfache Weise durch ein Magnetventil mit einer Rückstelleinrichtung, welche abweichend von der seit vielen Jahrzehnten üblichen Konstruktion auf eine Rückstellfeder verzichtet. Die Rückstellfunktion wird erfindungsgemäß durch eine zielgerichtete Anordnung von zwei Permanentmagneten erreicht. Die Erfindung macht sich dabei den Effekt zu Nutze, dass sich zwei Permanentmagnete abstoßen, wenn sich zwei gleichartige Pole, also Nordpol und Nordpol oder Südpol und Südpol, der beiden Permanentmagnete gegenüberstehen, beziehungsweise sich anziehen, wenn sich zwei ungleichartige Pole, also Nordpol und Südpol, gegenüberstehen. Dadurch, dass an dem beweglichen Anker des Magnetventils ein erster Permanentmagnet und an dem ortsfesten Kern ein zweiter Permanentmagnet mit zueinander entgegengesetzten magnetischen Ausrichtungen angeordnet sind, wird der bewegliche Anker von dem am Kern angeordneten Permanentmagneten abgestoßen und dadurch in einer definierten Ruheposition gehalten. Die elektromagnetische Spule kann bestromt werden, um eine elektromagnetische Kraft zu erzeugen, welche der permanentmagnetischen Kraft zwischen dem Anker und dem Kern entgegenwirkt und größer ist als diese. Dadurch kann der Anker aus der erwähnten Ruheposition heraus bewegt werden.

Das Magnetventil kann je nach Anforderung als in Ruhestellung geschlossenes Ventil (NC-Typ) oder in Ruhestellung geöffnetes Ventil (NO-Typ) ausgebildet sein. Dies kann durch eine entsprechende Ausrichtung der Magnetpole der beiden Permanentmagnete zueinander erreicht werden. Die Rückstelleinrichtung gemäß der Erfindung hat den Vorteil, dass sie keine mechanischen Bauelemente, insbesondere keine Feder aufweist, welche durch häufige Schaltvorgänge und/oder äußere mechanische Belastungen zerstört werden könnten. Dadurch wird eine hohe Betriebssicherheit und Langlebigkeit des Magnetventils auch bei starker Beanspruchung erreicht. Die beiden Permanentmagnete benötigen einen kleineren Einbauraum als eine herkömmliche Rückstellfeder. Dadurch ist eine sehr kompakte Bauform des Magnetventils erreichbar.

Gemäß einer ersten Weiterbildung der Erfindung kann vorgesehen sein, dass das Magnetventil als ein monostabiles Magnetventil ausgebildet ist, dass der erste Permanentmagnet an der dem Anker zugewandten Stirnseite des Kerns angeordnet ist, dass der zweite Permanentmagnet an der dem Kern zugewandten Stirnseite des Ankers angeordnet ist, dass die beiden Permanentmagnete derart koaxial zueinander angeordnet sind, dass zwei gleichartige Magnetpole einander zugewandt sind, welche eine permanentmagnetische Abstoßungskraft erzeugen, die den beweglichen Anker von dem unbeweglichen Kern abstößt, dass der Anker im unbestromten Zustand der Spule durch die permanentmagnetische Abstoßungskraft in seiner Schließstellung festgehalten wird, und dass der Anker im bestromten Zustand der Spule durch eine elektromagnetische Anziehungskraft der Spule, die permanentmagnetische Abstoßungskraft überwindend, aus der Schließstellung in eine Offenstellung bewegbar ist.

Demnach kann das Magnetventil als ein monostabiles 2/2-Wegeventil ausgebildet sein, welches in dessen Ruhestellung, also im unbestromten Zustand der Spule, geschlossen ist. Die Positionierung des beweglichen Ankers in seiner Schließstellung wird durch die gegenseitige Abstoßung der beiden Permanentmagnete erreicht. Da bei dem Magnetventil der Kern unbeweglich angeordnet ist, wird der bewegliche Anker durch die permanentmagnetische Abstoßungskraft der beiden Permanentmagnete mit seinem Ventilschließelement gegen den Ventilsitz des Ventilgehäuses gedrückt und dadurch das Magnetventil geschlossen.

Durch Bestromen der Spule wird eine elektromagnetische Kraft auf den Anker ausgeübt, welche größer ist als die permanentmagnetische Abstoßungskraft der beiden Permanentmagnete. Daher wird Anker bei bestromter Spule in Richtung zum Kern bewegt, wodurch das Magnetventil geöffnet wird. In dessen Folge kann ein Medium, beispielsweise Druckluft, über die Ventileinlassöffnung durch das Ventilgehäuse und die Ventilauslassöffnung hindurchströmen. Die Komponenten des Magnetventils, nämlich die elektromagnetische Spule, der Kern, der Anker sowie die beiden Permanentmagneten sind hinsichtlich deren Anordnung und Eigenschaften derart aufeinander abgestimmt, dass bei einer Bestromung der Spule eine elektromagnetische Anziehungskraft erzeugt wird, welche die permanentmagnetische Abstoßungskraft überwindet, wodurch der Anker von dem Ventilsitz abhebt. Sobald die Bestromung der Spule abgeschaltet wird, kehrt der Anker durch die Abstoßungskraft der beiden Permanentmagnete in seine Ruheposition beziehungsweise in die Schließstellung des Ankers zurück.

Gemäß einer zweiten Weiterbildung der Erfindung ist vorgesehen, dass das Magnetventil ebenfalls als ein monostabiles Magnetventil ausgebildet ist, wobei der unbewegliche Kern jedoch eine erste Entlüftungsöffnung aufweist, dass diese erste Entlüftungsöffnung als eine durchgehende Axialbohrung in dem unbeweglichen Kern sowie in dem mit dem Kern verbundenen ersten Permanentmagneten ausgebildet ist, dass in der Schließstellung des Ankers die erste Entlüftungsöffnung in dem Kern mit der Ventilauslassöffnung im Ventilgehäuse strömungstechnisch verbunden ist, und dass in der Offenstellung des Ankers diese erste Entlüftungsöffnung abgesperrt ist.

Demnach kann das Magnetventil als monostabiles 3/2-Wegeventil ausgebildet sein, welches in dessen Ruhestellung, also im unbestromten Zustand der Spule, geschlossen ist. Das Magnetventil weist einen im Schließzustand geöffneten Entlüftungspfad auf, wodurch die Ventilauslassöffnung beziehungsweise eine daran angeschlossene Druckausgangleitung drucklos geschaltet ist. Der am Kern befestigte Permanentmagnet kann ringförmig ausgebildet sein, durch dessen Öffnung der Entlüftungspfad hindurch führt. Dadurch ist vergleichsweise einfach eine Entlüftungseinrichtung an einem Magnetventil mit den grundlegenden Merkmalen der Erfindung geschaffen. Im geöffneten Zustand dieses Magnetventils, in welchem der Anker stirnseitig an dem Kern anliegt, verschließt der Permanentmagnet des Ankers die Öffnung im Permanentmagnet des Kerns. Um eine gute Abdichtwirkung zu erreichen kann vorgesehen sein, dass stirnseitig an dem Anker und/oder dem Kern ein Dichtring angeordnet ist.

Alternativ zu der gerade erläuterten Ausführungsform kann bei einem erfindungsgemäß ausgebildeten Magnetventil vorgesehen sein, dass dieses ebenfalls als ein monostabiles Magnetventil ausgebildet ist, dass in dem Ventilgehäuse eine zweite Entlüftungsöffnung ausgebildet ist, dass die zweite Entlüftungsöffnung als eine Radialbohrung in dem Ventilgehäuse ausgebildet ist, dass ein bidirektional wirksames Ventilschließelement sowie ein bidirektional wirksamer Ventilsitz vorhanden sind, dass in der Schließstellung des Ankers die zweite Entlüftungsöffnung in dem Ventilgehäuse mit der Ventilauslassöffnung strömungstechnisch verbunden ist, und dass in der Offenstellung des Ankers diese Entlüftungsöffnung abgesperrt ist.

Bei dieser Ausführungsform eines monostabiles 3/2-Wegeventil weist der Kern keine Entlüftungsbohrung auf. Vielmehr ist ein Entlüftungsausgang durch eine Radialbohrung in dem Ventilgehäuse gebildet. Außerdem ist an dem Ventilgehäuse ein zweiter Ventilsitzabschnitt ausgebildet, welcher koaxial gegenüber dem ersten Ventilsitzabschnitt ausgebildet ist. Beide Ventilsitzabschnitte bilden zusammen definitionsgemäß einen bidirektional wirksamen Ventilsitz. Dementsprechend ist bei diesem Magnetventil ein bidirektional wirksames Ventilschließelement vorhanden, welches einen ersten Ventilschließelementabschnitt und koaxial gegenüberliegend einen zweiten Ventilschlie-ßelementabschnitt aufweist.

Wenn der Anker in seiner Schließstellung positioniert ist, liegt der erste Ventilschlie-ßelementabschnitt mit seiner ankerfernen Seite an dem ersten Ventilsitzabschnitt der Ventileinlassöffnung an und sperrt diese dadurch ab. Der radiale Entlüftungsausgang ist bei dieser Schließstellung des Ankers geöffnet und daher strömungstechnisch mit der Ventilauslassöffnung verbunden. Wenn sich der Anker in seiner Offenstellung befindet liegt der zweite Ventilschließelementabschnitt mit seiner ankernahen Seite an dem zweiten Ventilsitzabschnitt an und versperrt dadurch den radialen Entlüftungsausgang, während die Ventileinlassöffnung geöffnet ist. Hierdurch ist die Ventileinlassöffnung mit der Ventilauslassöffnung strömungstechnisch verbunden.

Bei dieser Bauform des Magnetventils kann zusätzlich vorgesehen sein, dass der Anker an seiner vom Kern fernen Stirnseite mit einem langgestreckten Verbindungsstück verbunden ist, dass sich das Verbindungsstück koaxial zur Spulenlängsachse erstreckt und eine Öffnung im Ventilgehäuse abgedichtet durchdringt, dass das Verbindungsstück an seinem ankerfernen Ende mit einer Stützplatte verbunden ist, dass an der Stützplatte das bidirektionale Ventilschließelement befestigt ist, dass das bidirektionale Ventilschließelement an seiner ankerfernen Stirnseite den ersten Ventilschließelementabschnitt sowie an seiner ankernahen Stirnseite den zweiten Ventilschließelementabschnitt aufweist, dass der erste Ventilschließelementabschnitt an dem ersten Ventilsitzabschnitt die Ventileinlassöffnung abdichtend anlegbar ist, und dass der zweite Ventilschließelementabschnitt an dem zweiten Ventilsitzabschnitt die radiale Entlüftungsöffnung abdichtend anlegbar ist.

Die Erfindung ist zwar für monostabile Magnetventile, also für Ventile mit genau einer definierten Ruhestellung des beweglichen Ankers im unbestromten Zustand der Spule konzipiert, aber nicht darauf beschränkt. Der erfindungsgemäße Aufbau eines Magnetventils kann ebenso vorteilhaft an bistabilen Magnetventilen genutzt werden, also an Magnetventilen mit zwei definierten Ruhestellungen des beweglichen Ankers im stromlosen Zustand der Spule. Dabei können beispielsweise zwei Permanentmagneteinrichtungen mit jeweils zwei Permanentmagneten gemäß der Lehre der Erfindung zum Einsatz kommen, um eine bidirektional wirksame Rückstellungsfunktion zu realisieren.

Außerdem kann die elektromagnetische Spule sowohl bei monostabilen Magnetventilen als auch bei bistabilen Magnetventilen einteilig mit einer Wicklung sowie einem elektrischen Anschluss, oder mehrteilig mit zwei Wicklungen und zwei elektrischen Anschlüssen ausgebildet sein.

Weiter sind auch Kombinationen einer Permanentmagneteinrichtung gemäß der Erfindung mit einer zusätzlichen mechanischen Rückstellfeder möglich, welche in einer Rückstelleinrichtung eines Magnetventils zusammenwirken. Die mechanische Feder kann in diesem Fall schwächer und kleiner ausgelegt sein als eine herkömmliche Rückstellfeder, da diese von der Permanentmagneteinrichtung gemäß der Erfindung in ihrer Funktion unterstützt wird. Wichtig ist lediglich, dass an dem beweglichen Anker und an zumindest einem feststehenden Kern des Magnetventils zumindest zwei Permanentmagnete derart gegenüberstehend angeordnet sind, dass mittels deren Permanentmagnetkraft eine eigenständige Rückstellkraft für den Anker verfügbar ist, welche keine mechanische Feder zwingend benötigt.

Schließlich betrifft die Erfindung auch eine Getriebeschaltanlage eines automatisierten Schaltgetriebes für ein Fahrzeug, wie ein Nutzfahrzeug oder ein Personenkraftwagen, mit wenigstens einem Magnetventil, welches gemäß einem der Vorrichtungsansprüche aufgebaut ist.

Die Erfindung wird nachstehend anhand von in der beigefügten Zeichnung dargestellten Ausführungsbeispielen näher erläutert. In der Zeichnung zeigt
Fig. 1a eine schematische Längsschnittdarstellung eines Magnetventils gemäß einer ersten Ausführungsform der Erfindung in dessen Schließstellung,
Fig. 1b das Magnetventil gemäß Fig. 1a in dessen Offenstellung,
Fig. 2 ein Kraft-Weg-Diagramm eines Ventilhubs eines Magnetventils gemäß der Erfindung, im Vergleich zu einem Magnetventil gemäß dem Stand der Technik,
Fig. 3a eine schematische Längsschnittdarstellung eines Magnetventils gemäß einer zweiten Ausführungsform der Erfindung in dessen Schließstellung,
Fig. 3b das Magnetventil gemäß Fig. 2a in dessen Offenstellung,
Fig. 4a eine schematische Längsschnittdarstellung eines Magnetventils gemäß einer dritten Ausführungsform der Erfindung in dessen Schließstellung,
Fig. 4b das Magnetventil gemäß Fig. 3a in dessen Offenstellung,
Fig. 5a eine schematische Längsschnittdarstellung eines Magnetventils gemäß dem Stand der Technik in dessen Schließstellung, und
Fig. 5b das Magnetventil gemäß Fig. 5a in dessen Offenstellung,

Einige Bauelemente in den Figuren stimmen überein, sodass diese mit denselben Bezugsziffern bezeichnet sind.

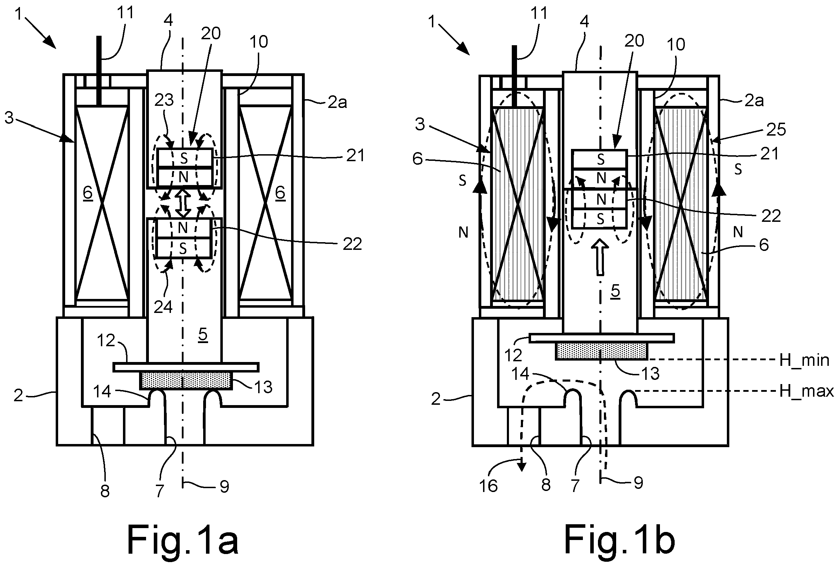

Das in Fig. 5a und Fig. 5b dargestellte Magnetventil 1.1 gemäß dem Stand der Technik ist bereits eingangs beschrieben worden. Im Unterschied zu dem bekannten Magnetventil 1.1 weist das in den Figuren Fig. 1a und 1b dargestellte erfindungsgemäße Magnetventil 1 eine Rückstelleinrichtung 20 auf, welche als eine Anordnung von Permanentmagneten ausgebildet ist. Eine herkömmliche Rückstelleinrichtung 15 mit einer Rückstellfeder 15a, wie eingangs beschrieben, ist demnach nicht vorhanden. Die in Fig. 1a und in Fig. 1b gezeigte Rückstelleinrichtung 20 weist gemäß der Erfindung einen ersten Permanentmagnet 21 und einen zweiten Permanentmagnet 22 auf. Der erste Permanentmagnet 21 ist an der dem Anker 5 zugewandten Stirnseite des ortsfesten Kerns 4 angeordnet und mit dem Kern 4 verbunden. Der zweite Permanentmagnet 22 ist an der dem Kern 4 zugewandten Stirnseite des axial beweglichen Ankers 5 angeordnet und mit dem Anker 5 verbunden.

Die beiden Permanentmagnete 21, 22 sind koaxial zueinander angeordnet und so ausgerichtet, dass die Magnetfeldlinien ihrer Magnetfelder 23, 24 jeweils zwischen dem magnetischen Nordpol N und dem magnetischen Südpol S etwa koaxial zur Spulenlängsachse 9 verlaufen, wobei sich zwei gleichartige Magnetpole, vorliegend beispielsweise der erste Nordpol N und der zweite Nordpol N, zueinander gegenüberstehen. Folglich wird der bewegliche Anker 5 durch eine permanentmagnetische Abstoßungskraft von dem ortsfesten Kern 4 abgestoßen und soweit in Richtung zu der Ventileinlassöffnung 7 axial geschoben, bis ein Ventilschließelement 13, welches an der gegenüberliegenden anderen Stirnseite des Ankers 5 angeordnet ist, an dem Ventilsitz 14 anliegt und die Ventileinlassöffnung 7 verschließt. Die in den Figuren 1a bis 4b dargestellte Stützplatte 12 dient hier nicht als Widerlager für eine Rückstellfeder, sondern als Befestigungsadapter für das jeweils abdichtende Ventilschließelement 13, 44.

Die Fig. 1a zeigt das Magnetventil 1 in seiner Schließstellung, in welcher der bewegliche Anker 5 vom Kern 4 einen maximalen axialen Abstand aufweist, und das Ventilschließelement 13 aufgrund der permanentmagnetischen Abstoßung zwischen dem ortsfesten Kern 4 beziehungsweise dem ersten Permanentmagneten 21 und dem beweglichen Anker 5 beziehungsweise dem zweiten Permanentmagnet 22 an dem Ventilsitz 14 der Ventileinlassöffnung 7 anliegt. Das Magnetventil 1 ist als ein 2/2-Wegeventil ausgebildet und von der NC-Bauart, welches im stromlosen Zustand der Spule 3 geschlossen ist. Dementsprechend ist die Ventileinlassöffnung 7 im unbetätigten Zustand des Magnetventils 1 versperrt.

Die Fig. 1b zeigt die Offenstellung des Magnetventils 1. Zur Betätigung des Magnetventils 1 wurde dazu die elektrische Spule 3 bestromt. Die Spule 3 erzeugte dabei ein Magnetfeld 25, welches im Kern 4 eine Anziehungskraft erzeugte, die den Anker 5 in Richtung zum Kern 4 bewegte. Der Anker 5 vollzog dabei einen Hub H in Richtung zum Kern 4, wodurch die Ventileinlassöffnung 7 geöffnet wurde. In Folge dessen kann ein Fluid über den dargestellten Belüftungspfad 16 durch das Ventilgehäuse 2 hindurchströmen und an der Ventilauslassöffnung 8 ein Fluiddruck zur Verfügung stehen. Gemäß der in der Fig. 1b dargestellten Position der Offenstellung H_min des Ankers 5 weist dieser dabei seinen geringsten Abstand zum Kern 4 auf. Bei der in der Fig. 1b ebenfalls eingezeichneten Position der Schließstellung H_max des Ankers 5 weist dieser, wie es die Fig. 1a zeigt, seinen maximalen Abstand zum Kern 4 auf.

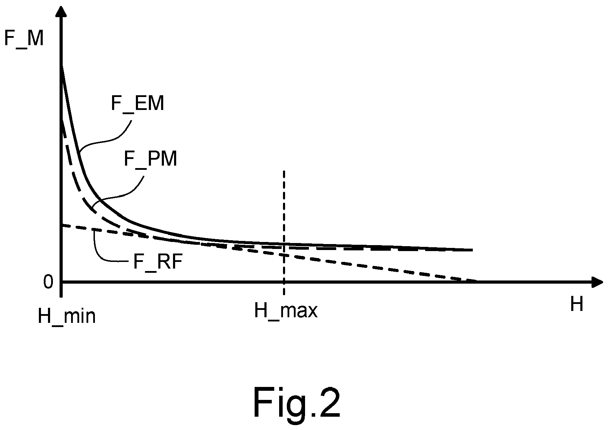

Die Fig. 2 zeigt den Verlauf der elektromagnetischen Kraft F_EM und den Verlauf der permanentmagnetischen Kraft F_PM in Abhängigkeit vom Ventilhub H des Magnetventils 1. Wie ein Vergleich mit der Fig. 1a zeigt, wirkt in der Schließstellung H_max des Ankers 5 nur die permanentmagnetische Rückstellkraft der Rückstelleinrichtung 20 auf den Anker 5 und drückt diesen gegen den Ventilsitz 14. Sobald die Bestromung der Spule 3 eingeschaltet wird, wirkt die elektromagnetische Kraft F_EM der permanentmagnetischen Kraft F_PM entgegen und dominiert über letztere. Der Anker 5 beginnt sich von dem Ventilsitz 14 abzuheben, da die elektromagnetische Anziehung überwiegt. Bei der Annäherung des Ankers 5 an den Kern 4 steigt die abstoßende permanentmagnetische Kraft F_PM der Rückstelleinrichtung 20 exponentiell an. Die Kurve der anziehenden elektromagnetischen Kraft F_EM verläuft annähernd parallel zur abstoßenden permanentmagnetischen Kraft F_PM, liegt dabei jedoch stets etwas oberhalb der permanentmagnetischen Kraft F_PM. Demnach überwiegt die Anziehungskraft auf den Anker 5 hin zum Kern 4 und der Anker 5 erreicht schließlich seinen geringsten Abstand zum Kern 4 in der Offenstellung H_min, wobei der Anker 5 gemäß Fig. 1b an den Kern 4 anschlägt. Sobald die elektromagnetische Spule 3 ausgeschaltet ist, bewegt sich der Anker 5 durch die Kraftausübung der permanentmagnetischen Rückstelleinrichtung 20 wieder hin zu seiner Schließstellung H_max, in welcher das Magnetventil 1 geschlossen ist. In dieser Schließstellung H_max hat der Anker 5 gemäß Fig. 1a seinen maximalen Abstand von dem Kern 4 eingenommen. Zum Vergleich mit dem Stand der Technik ist in Fig. 2 auch der Verlauf der Rückstellkraft F_RF einer herkömmlichen Rückstellfeder 15a gemäß Fig. 5a und Fig. 5b dargestellt, welche linear von der Auslenkung der Feder abhängt.

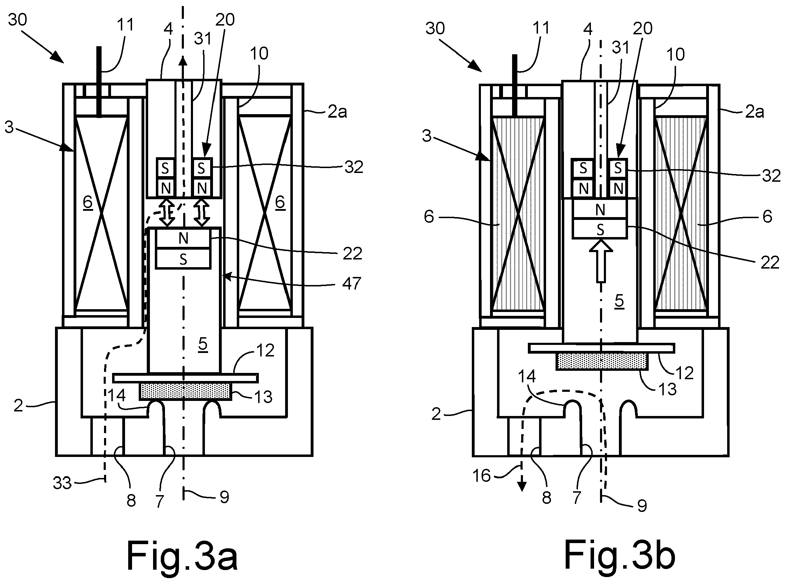

Fig. 3a und Fig.3b zeigen ein zweites Ausführungsbeispiel eines Magnetventils 30 mit den Merkmalen der Erfindung. Dieses Magnetventil 30 ist als ein 3/2-Wegeventil ausgebildet und weist eine erste Entlüftungsöffnung 31 zur Entlüftung des Magnetventils 30 beziehungsweise zur Entlüftung einer mit der Ventilauslassöffnung 8 verbundenen Druckleitung im unbetätigten Zustand des Magnetventils 30 auf. Die Entlüftungsöffnung 31 ist als eine durchgehende Axialbohrung in dem Kern 4 des Magnetventils 30 ausgebildet. Die Entlüftungsöffnung 31 ist außerdem durch einen mit dem Kern 4 verbundenen ringförmigen ersten Permanentmagnet 32 koaxial hindurchgeführt. Zudem ist zwischen der radialen Außenseite des Ankers 5 und der radialen Innenseite des Spulenträgers 10 ein hülsenförmiger Strömungsweg 47 ausgebildet, über den die Ventilauslassöffnung 8 und die erste Entlüftungsöffnung 31 strömungstechnisch miteinander verbunden sind. Im Übrigen ist dieses zweite Magnetventil 30 baugleich ausgebildet wie das erste Magnetventil 1 gemäß den Figuren 1a und 1b. In der Schließstellung des Magnetventils 30 ist der Anker 5 gemäß Fig. 3a axial beabstandet von dem Kern 4 angeordnet. Dadurch ist ein Entlüftungspfad 33 zwischen der Ventilauslassöffnung 8 und der Entlüftungsöffnung 31 offen, wodurch ein Fluid nach außen entweichen und ein Fluiddruck abgebaut werden kann. In der Offenstellung des Magnetventils 30 ist der Belüftungspfad 16 offen und Entlüftungspfad 33 versperrt, da der Anker 5 dann an dem Kern 4 anliegt und die Entlüftungsöffnung 31 verschließt.

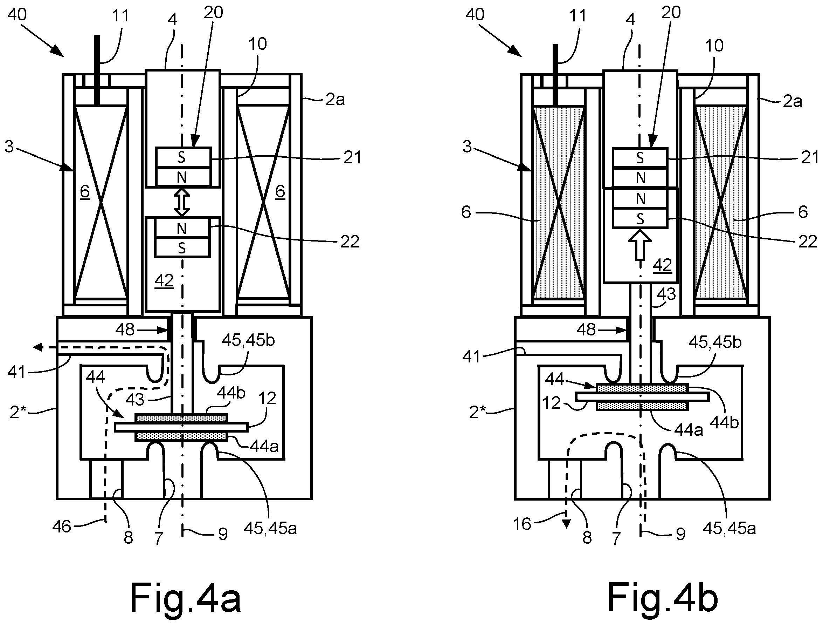

Fig. 4a und Fig.4b zeigen in einem weiteren Ausführungsbeispiel ein drittes Magnetventil 40, welches die Merkmale der Erfindung aufweist, jedoch eine andere Entlüftungsöffnung 41 als bei der Ausführungsform gemäß den Figuren 3a und 3b hat. Diese alternative Entlüftungsöffnung 41 ist als eine Radialbohrung in dem Ventilgehäuse 2* ausgebildet. Außerdem weist der axial bewegliche Anker 42 ein stabförmiges axiales Verbindungsstück 43 auf, welches eine Öffnung im Ventilgehäuse 2* abgedichtet durchdringt, und an dessen ventilsitznahem Ende ein bidirektional wirksames Ventilschließelement 44 befestigt ist. Das bidirektionale Ventilschließelement 44 ist mit einer Stützplatte 12 verbunden, welche an dem Verbindungsstück 43 befestigt ist.

Dieses bidirektionale Ventilschließelement 44 weist einen ersten Ventilschließelementabschnitt 44a und einen zweiten Ventilschließelementabschnitt 44b auf. Der erste Ventilschließelementabschnitt 44a ist auf der von dem Anker 5 abgewandten Seite der mit dem Verbindungsstück 43 verbundenen Stützplatte 12 angeordnet. Der zweite Ventilschließelementabschnitt 44b ist auf der dem Anker 5 zugewandten Seite der Stützplatte 12 angeordnet. Außerdem ist in dem Ventilgehäuse 2 ein bidirektional wirksamer Ventilsitz 45 ausgebildet, welcher mit dem bidirektionalen Ventilschließelement 44 zusammenwirkt. Der bidirektionale Ventilsitz 45 weist einen ersten Ventilsitzabschnitt 45a und einen zweiten Ventilsitzabschnitt 45b auf. Der erste Ventilsitzabschnitt 45a ist ankerfern im Ventilgehäuse 2* ausgebildet und der Ventileinlassöffnung 7 zugeordnet. Der zweite Ventilsitzabschnitt 45b ist ankernah im Ventilgehäuse 2* ausgebildet und der radialen Entlüftungsöffnung 41 zugeordnet.

In der in der Fig. 4a gezeigten Schließstellung des unbetätigten dritten Magnetventils 40 ist die Ventileinlassöffnung 7 abgesperrt. Gleichzeitig ist ein Entlüftungspfad 46 zwischen der Ventilauslassöffnung 8 und dem Ausgang der zweiten Entlüftungsöffnung 41 offen. In der in der Fig. 4b gezeigten Offenstellung des betätigten Magnetventils 40 ist die Ventileinlassöffnung 7 offen und der Belüftungspfad 16 freigeschaltet. Gleichzeitig ist der Entlüftungspfad 46 zwischen der Ventilauslassöffnung 8 und dem Ausgang der Entlüftungsöffnung 41 abgesperrt.

### Bezugszeichen (Bestandteil der Beschreibung)

- 1: Magnetventil (1. Ausführungsform)
- 1.1: Magnetventil (Stand der Technik)
- 2: Ventilgehäuse (1. Ausführungsform)
- 2*: Ventilgehäuse (2. Ausführungsform)
- 2a: Gehäuseteil des Ventilgehäuses 2, 2*
- 3: Elektromagnetische Spule
- 4: Kern
- 5: Anker
- 6: Wicklung der Spule
- 7: Ventileinlassöffnung
- 8: Ventilauslassöffnung
- 9: Spulenlängsachse
- 10: Spulenträger
- 11: Elektrischer Anschluss
- 12: Stützplatte
- 13: Ventilschließelement
- 14: Ventilsitz
- 15: Federartige Rückstelleinrichtung (Stand der Technik)
- 15a: Rückstellfeder der Rückstelleinrichtung 15
- 16: Belüftungspfad
- 20: Permanentmagnetische Rückstelleinrichtung
- 21: Erster Permanentmagnet (1. Ausführungsform)
- 22: Zweiter Permanentmagnet der Rückstelleinrichtung
- 23: Magnetfeld des ersten Permanentmagnets
- 24: Magnetfeld des zweiten Permanentmagnets
- 25: Magnetfeld der elektromagnetischen Spule
- 30: Magnetventil (2. Ausführungsform)
- 31: Erste Entlüftungsöffnung (2. Ausführungsform)
- 32: Ringförmiger erster Permanentmagnet (2. Ausführungsform)
- 33: Erster Entlüftungspfad (2. Ausführungsform)
- 40: Magnetventil (3. Ausführungsform)
- 41: Zweite Entlüftungsöffnung (3. Ausführungsform)
- 42: Zweiter Anker (3. Ausführungsform)
- 43: Verbindungsstück des zweiten Ankers (3. Ausführungsform)
- 44: Bidirektionales Ventilschließelement (3. Ausführungsform)
- 44a: Erster Ventilschließelementabschnitt des Ventilschließelements 44
- 44b: Zweiter Ventilschließelementabschnitt des Ventilschließelements 44
- 45: Bidirektionaler Ventilsitz (3. Ausführungsform)
- 45a: Ersten Ventilsitzabschnitt des Ventilsitzes 45
- 45b: Zweiter Ventilsitzabschnitt des Ventilsitzes 45
- 46: Zweiter Entlüftungspfad (3. Ausführungsform)
- 47: Hülsenförmiger Strömungsweg
- 48: Öffnung im Ventilgehäuse 2*
- F_EM: Elektromagnetische Kraft
- F_PM: Permanentmagnetische Kraft
- F_RF: Federrückstellkraft (Stand der Technik)
- H: Ankerhub
- H_min: Offenstellung des Ankers
- H_max: Schließstellung des Ankers
- N: Magnetischer Nordpol
- S: Magnetischer Südpol

## Patentansprüche

1. Magnetventil (1, 30, 40), mit einem Ventilgehäuse (2, 2a, 2*), mindestens einer elektromagnetischen Spule (3), welche einen mit dem Ventilgehäuse (2, 2a, 2*) verbundenen Spulenträger (10) und eine an dem Spulenträger (10) angeordnete elektrisch leitende Wicklung (6) aufweist, mindestens einem unbeweglich angeordneten ferromagnetischen Kern (4), einem innerhalb der Spule (3) koaxial zur Spulenlängsachse (9) beweglich angeordneten Anker (5, 42), einer am Ventilgehäuse (2, 2*) ausgebildeten Ventileinlassöffnung (7) mit einem Ventilsitz (14, 45, 45a, 45b), einer am Ventilgehäuse (2) ausgebildeten Ventilauslassöffnung (8), und mit einem mit dem Anker (5, 42) verbundenen Ventilschließelement (13, 44, 44a, 44b), wobei zumindest die Ventileinlassöffnung (7) durch das Ventilschließelement (13, 44, 44a, 44b) und den Ventilsitz (14, 45, 45a, 45b) druckdicht verschließbar ist, sowie mit einer den Anker (5, 42) und das Ventilschließelement (13, 44, 44a, 44b) in Schließrichtung oder in Öffnungsrichtung belastende Rückstelleinrichtung (20), **dadurch gekennzeichnet, dass** die Rückstelleinrichtung (20) mindestens zwei Permanentmagnete (21, 22, 32) aufweist, dass ein erster Permanentmagnet (21, 32) mit dem Kern (4) fest verbunden ist, dass ein zweiter Permanentmagnet (22) mit dem Anker (5, 42) fest verbunden ist, dass die beiden Permanentmagnete (21, 22, 32) derart angeordnet sind, dass eine Permanentmagnetkraft zwischen dem Kern (4) und dem Anker (5, 42) wirksam ist, mittels welcher der Anker (5, 42) im unbestromten Zustand der Spule (3) in eine Schließstellung oder in eine Offenstellung bewegbar und dort festhaltbar ist, und dass der Anker (5, 42) im bestromten Zustand der Spule (3) durch eine Elektromagnetkraft der Spule (3), welche größer ist als die zwischen dem Kern (4) und dem Anker (5, 42) wirksame Permanentmagnetkraft, aus der Schließstellung oder der Offenstellung herausbewegbar ist.

2. Magnetventil nach Anspruch 1, **dadurch gekennzeichnet, dass** dieses als ein monostabiles Magnetventil (1, 30, 40) ausgebildet ist, dass der erste Permanentmagnet (21, 32) an der dem Anker (5, 42) zugewandten Stirnseite des Kerns (4) angeordnet ist, dass der zweite Permanentmagnet (22) an der dem Kern (4) zugewandten Stirnseite des Ankers (5, 42) angeordnet ist, dass die beiden Permanentmagnete (21, 22, 32) derart koaxial zueinander angeordnet sind, dass zwei gleichartige Magnetpole (N-N, S-S) einander zugewandt sind, welche eine permanentmagnetische Abstoßungskraft erzeugen, die den beweglichen Anker (5, 42) von dem unbeweglichen Kern (4) abstößt, dass der Anker (5, 42) im unbestromten Zustand der Spule (3) durch die permanentmagnetische Abstoßungskraft in seiner Schließstellung festgehalten wird, und dass der Anker (5, 42) im bestromten Zustand der Spule (3) durch eine elektromagnetische Anziehungskraft der Spule (3), die permanentmagnetische Abstoßungskraft überwindend, aus der Schließstellung in eine Offenstellung bewegbar ist.

3. Magnetventil nach Anspruch 1 oder 2, **dadurch gekennzeichnet, dass** dieses als ein monostabiles Magnetventil (30) ausgebildet ist, wobei der unbewegliche Kern (3) eine erste Entlüftungsöffnung (31) aufweist, dass die erste Entlüftungsöffnung (31) als eine durchgehende Axialbohrung in dem unbeweglichen Kern (3) sowie in dem mit dem Kern (3) verbundenen ersten Permanentmagneten (32) ausgebildet ist, dass in der Schließstellung des Ankers (5) die erste Entlüftungsöffnung (31) in dem Kern (3) mit der Ventilauslassöffnung (8) verbunden ist, und dass in der Offenstellung des Ankers (5) die erste Entlüftungsöffnung (31) abgesperrt ist.

4. Magnetventil nach Anspruch 1 oder 2, **dadurch gekennzeichnet, dass** dieses als ein monostabiles Magnetventil (40) ausgebildet ist, dass in dem Ventilgehäuse (2*) eine zweite Entlüftungsöffnung (41) ausgebildet ist, dass die zweite Entlüftungsöffnung (41) als eine Radialbohrung in dem Ventilgehäuse (2) ausgebildet ist, dass ein bidirektional wirksames Ventilschließelement (44, 44a, 44b) sowie ein bidirektional wirksamer Ventilsitz (45, 45a, 45b) vorhanden sind, dass in der Schließstellung des Ankers (42) die zweite Entlüftungsöffnung (41) in dem Ventilgehäuse (2*) mit der Ventilauslassöffnung (8) strömungstechnisch verbunden ist, und dass in der Offenstellung des Ankers (42) diese Entlüftungsöffnung (41) abgesperrt ist.

5. Magnetventil nach Anspruch 4, **dadurch gekennzeichnet, dass** der Anker (42) an seiner vom Kern (4) fernen Stirnseite mit einem langgestreckten Verbindungsstück (43) verbunden ist, dass sich das Verbindungsstück (43) koaxial zur Spulenlängsachse (9) erstreckt und eine Öffnung (48) im Ventilgehäuse (2*) abgedichtet durchdringt, dass das Verbindungsstück (43) an seinem ankerfernen Ende mit einer Stützplatte (12) verbunden ist, dass an der Stützplatte (12) das Ventilschließelement (44) befestigt ist, dass das Ventilschließelement (44) an seiner ankerfernen Stirnseite einen ersten Ventilschließelementabschnitt (44a) sowie an seiner ankernahen Stirnseite einen zweiten Ventilschließelementabschnitt (44b) aufweist, dass der erste Ventilschließelementabschnitt (44a) an einem ersten Ventilsitzabschnitt (45a) die Ventileinlassöffnung (7) abdichtend anlegbar ist, und dass der zweite Ventilschließelementabschnitt (44b) an einem zweiten Ventilsitzabschnitt (45b) die radiale Entlüftungsöffnung (41) abdichtend anlegbar ist.

6. Getriebeschaltanlage, wie automatisiertes Schaltgetriebe, für ein Fahrzeug, wie Nutzfahrzeug oder Personenkraftwagen, mit wenigstens einem Magnetventil (1, 30, 40), welches gemäß einem der Vorrichtungsansprüche aufgebaut ist.
